# EUROPÄISCHE PATENTSCHRIFT

(11) **EP 1 257 008 B1**
(45) Veröffentlichungstag und Bekanntmachung des Hinweises auf die Patenterteilung: **10.01.2007**
(21) Anmeldenummer: 02290379.3
(22) Anmeldetag: 15.02.2002
(51) Int. Cl.: H01R 13/533

(54) **Anschlussanordnung für elektrische Signale**
Connecting device for electrical signals
Dispositif de raccordement pour signaux électriques

(30) Priorität: 24.03.2001 DE 10114650
(43) Veröffentlichungstag der Anmeldung: 13.11.2002
(73) Patentinhaber: Nexans, 75008 Paris (FR)
(72) Erfinder: Riedel, Richard, Dipl.-Ing., 92685 Floss (DE); Nachbauer, Otto, 92685 Floss (DE)
(74) Vertreter: Döring, Roger

(56) Entgegenhaltungen:
- DE-A- 19 649 780
- US-A- 3 694 265
- US-A- 4 060 094

## Beschreibung

Die Erfindung bezieht sich auf eine Anordnung zum Anschließen einer elektrische Signale abgebenden Signalquelle an eine flexible elektrische Leitung, die mindestens zwei mit temperaturbeständigem Material isolierte elektrische Leiter hat, bei welcher mindestens zwei gegeneinander isolierte elektrische Signalleiter in einem metallischen Rohr angeordnet sind, die an einem Ende des Rohres mit der Signalquelle und an dessen anderem Ende feuchtigkeitsdicht mit den Leitern der flexiblen Leitung verbunden sind (DE 195 16 760 A1).

Eine derartige Anordnung kann und soll in Bereichen eingesetzt werden, in denen hohe Temperaturen von beispielsweise 700 °C herrschen. Sie muß bei so hohen Temperaturen stabil bleiben, damit eine ungestörte Übertragung der von der Signalquelle gelieferten Signale möglich ist. Ein spezielles Einsatzgebiet für eine solche Anordnung ist die sogenannte "Lambda-Sonde", mit der Katalysatoren von Kraftfahrzeugen überwacht werden. Dieser Einsatzfall wird im folgenden berücksichtigt, stellvertretend für alle anderen möglichen Anwendungen. Statt des Wortes "Signalquelle" wird ab jetzt das Wort "Sonde" verwendet.

Die Sonde ist bei bekannten, in der Praxis eingesetzten Anordnungen an elektrische Leiter angeschlossen, die unter Zwischenschaltung von hochtemperaturfestem Isoliermaterial in ein Stahlrohr eingebettet sind. Für die weiterführende Signalübertragung werden temperaturbeständige flexible Leitungen verwendet, deren Leiter elektrisch leitend mit den im Stahlrohr befindlichen Leitern verbunden sind. Die flexiblen Leitungen müssen nicht nur temperaturbeständig, sondern auch feuchtigkeitsdicht sein, da sie bei allen möglichen Witterungsbedingungen funktionsfähig bleiben müssen, denen das entsprechende Kraftfahrzeug ausgesetzt wird. Das gilt auch für die Verbindungsstelle zwischen der flexiblen Leitung und den im Stahlrohr enthaltenen Leitern.

Bei der bekannten Anordnung nach der eingangs erwähnten DE 195 16 760 A1 wird zwischen einer Sonde und einer flexiblen elektrischen Leitung, deren Leiter beispielsweise mit Polytetrafluorethylen (PTFE) isoliert sind, ebenfalls ein steifes Metallrohr angeordnet, in dem elektrische Leiter mit Abstand zu einander in beispielsweise aus Magnesiumoxid bestehendes Isoliermaterial eingebettet sind, das den ganzen lichten Querschnitt des Metallrohrs ausfüllt. Die Verbindungsstellen zwischen den Leitern des Metallrohrs und den Leitern der flexiblen Leitung sind in einen gummielastischen Dichtkörper eingebettet, der sich bis über die isolierten Bereiche der Leiter der flexiblen Leitung erstreckt. Um den Dichtkörper herum ist eine metallische Hülse angeordnet, die an einem Ende fest mit dem Metallrohr verbunden und am anderen Ende um den Dichtkörper herumgepreßt ist. Diese bekannte Anordnung erfordert wegen der vielen Einzelteile einen relativ hohen Montageaufwand.

Der Erfindung liegt die Aufgabe zugrunde, die eingangs geschilderte Anordnung unter Erhalt ihrer Beständigkeit bei hohen Temperaturen einfacher zu gestalten.

Diese Aufgabe wird gemäß der Erfindung dadurch gelöst,
- daß die mit einem bei hohen Temperaturen in einem Bereich von 400 °C bis 700 °C beständigen Material isolierten Signalleiter miteinander verseilt sind,
- daß die Verbindungsstellen zwischen den Signalleitern und den Leitern der flexiblen Leitung innerhalb des Rohres in einem an dessen Wandung anliegenden Fixierstück aus temperaturbeständigem Isoliermaterial mit Abstand zueinander festgelegt sind,
- daß zwischen dem Fixierstück und dem der flexiblen Leitung zugewandten Ende des Rohres innerhalb desselben ein sich über den gesamten Rohrquerschnitt erstreckender, gummielastischer Dichtkörper aus temperaturbeständigem Isoliermaterial angeordnet ist und
- daß am anderen Ende des Rohres die Enden der aus demselben herausragenden Signalleiter abisoliert und innerhalb des Rohres in einer Scheibe aus mineralischem Material mit Abstand zueinander festgelegt sind, welche rundum an der Wandung des Rohres anliegt und dasselbe vollständig verschließt.

Diese Anordnung ist einfach zu montieren, da ihre nur wenigen und außerdem vorgefertigten Einzelteile - Fixierstück, Dichtkörper und Scheibe - leicht positioniert werden können. Sie sind in der fertigen Anordnung außerdem ohne zusätzliche Teile zusammen mit den miteinander verseilten Signalleitern geschützt im metallischen Rohr untergebracht. Das Wort "verseilen" steht dabei auch für "verdrehen" oder "verwürgen". Der Schutz ist nicht nur für hohe Temperaturen gegeben, sondern auch für mechanische Belastungen, insbesondere für beim Fahren des Fahrzeugs, in dem die Anordnung eingebaut ist, eintretende Erschütterungen. Das gilt besonders auch für die Signalleiter, welche durch die Verseilung so flexibel sind, daß Erschütterungen des Rohres sich nicht störend auf dieselben auswirken. Das Rohr selbst ist mit Vorteil gut biegbar ausgeführt. Durch die Verseilung können die Signalleiter außerdem ohne die Gefahr einer Beschädigung zusammen mit dem Rohr gebogen werden. Die Verbindungsstellen zu den Leitern der flexiblen Leitung sind durch den gummielastischen Dichtkörper gegen Feuchtigkeit abgedichtet, der selbst geschützt im metallischen Rohr untergebracht ist.

In bevorzugter Ausführungsform sind die Signalleiter mit einem Gewebe aus Glasfasern isoliert.

Ein Ausführungsbeispiel des Erfindungsgegenstandes ist in den Zeichnungen dargestellt.

Es zeigen:
Fig. 1 eine Gesamtansicht der Anordnung nach der Erfindung in schematischer Darstellung.
Fig. 2 ein Schnittbild eines Einzelteils der Anordnung in vergrößerter Darstellung.

Mit 1 ist eine elektrische Signale liefernde Sonde bezeichnet, beispielsweise eine λ -Sonde, deren Signale in einem Empfänger 2 empfangen werden. Die Sonde 1 ist an elektrische Signalleiter 3 angeschlossen, die in einem metallischen Rohr 4 angeordnet sind. Die Signalleiter 3 sind an Leiter 5 einer flexiblen elektrischen Leitung 6 angeschlossen, welche mit dem Empfänger 2 verbunden ist. Die Anzahl von Signalleitern 3 und Leitern 5 ist nicht begrenzt. Es sollen mindestens zwei Signalleiter 3 und zwei Leiter 5 vorhanden sein.

Die Leitung 6 ist als flexible, temperaturbeständige Leitung ausgebildet. Sie kann beispielsweise bis zu einer Temperatur von 230 °C eingesetzt werden. Ihre Leiter 5 sind jeder mit temperaturbeständigem Material isoliert, beispielsweise mit PTFE. Sie können von einem extrudierten Mantel oder einem Schlauch umgeben sein, die ebenfalls aus PTFE bestehen können. Die Leiter 5 der Leitung 6 können miteinander verseilt sein.

Die im Rohr 4 angeordneten Signalleiter 3 bestehen aus elektrisch gut leitendem Material, beispielsweise aus Zink. Sie sind mit einem bei hohen Temperaturen beständigen Material isoliert. Die Bezeichnung "hohe Temperaturen" umfaßt einen Bereich von 400 °C bis 700 °C. Solche Temperaturen herrschen beispielsweise am Katalysator eines in Betrieb befindlichen Kraftfahrzeugs. Die Isolierung der Signalleiter 3 besteht vorzugsweise aus einem Gewebe aus Glasfäden. Für das Rohr 4 wird in bevorzugter Ausführungsform eine Nickel-Chrom-Legierung eingesetzt. Es ist dadurch hitzebeständig und ausreichend stabil. Das Rohr 4 soll durch gezielte Materialauswahl und Bemessung seiner Wandstärke außerdem gut biegbar sein.

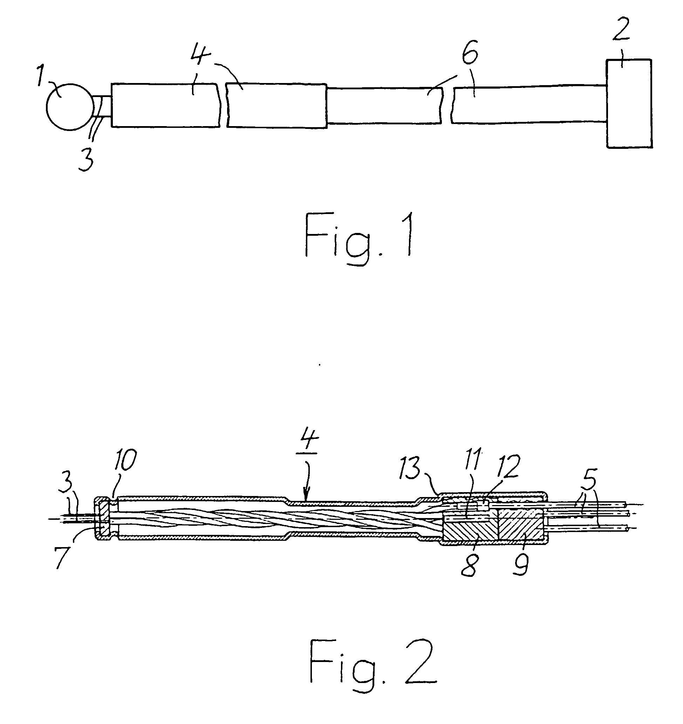

Die isolierten Signalleiter 3 sind miteinander verseilt bzw. verdreht. Sie sind an dem der Sonde 1 zugewandten Ende durch eine im Rohr 4 angebrachte Scheibe 7 gehalten und am anderen Ende in einem ebenfalls im Rohr 4 angeordneten Fixierstück 8 festgelegt. Das Rohr 4 umgibt den Verbund aus verseilten Signalleitern 3 gemäß Fig. 2 mit Abstand, so daß rund um dieselben ein Freiraum verbleibt. Der Freiraum des Rohres 4 kann aber auch mit hitzebeständigem Material ausgefüllt sein, daß seine Biegbarkeit und die Biegbarkeit der Signalleiter 3 nicht behindert. Dazu können beispielsweise Partikel aus keramischem Material verwendet werden. Durch ein solches Material kann auch der Schutz der Signalleiter 3 gegenüber Erschütterungen verbessert werden. Zwischen dem Fixierstück 8 und dem dortigen Ende des Rohres 4 ist ein gummielastischer Dichtkörper 9 im Rohr 4 angebracht.

Die Signalleiter 3 sind an ihrem der Sonde 1 zugewandten Ende abisoliert. Sie ragen als blanke Leiter aus dem Rohr 4 heraus. Am Ende des Rohres 4 sind die blanken Leiter in der aus mineralischem, insbesondere keramischem Material bestehenden Scheibe 7 mit Abstand zueinander festgelegt. Die Scheibe 7 liegt rundum an der Wandung des Rohres 4 an und verschließt dasselbe vollständig. Sie wird in der fertigen Anordnung durch das umgebördelte Ende des Rohres 4 und eine mit Abstand dazu in dasselbe eingeprägte Vertiefung 10 in ihrer Position gehalten. Sie kann sich dann in axialer Richtung nicht bewegen.

Das Fixierstück 8 besteht aus einem temperaturbeständigen Isoliermaterial. Es können hochpolymere Kohlenstoffverbindungen bzw. amorphe Polymere eingesetzt werden. In bevorzugter Ausführungsform besteht das Fixierstück 8 aus einem Polyetheretherketon (PEEK). Es ist mit axial verlaufenden Durchgangslöchern 11 ausgerüstet, in denen in der fertig montierten Anordnung die Verbindungsstellen 12 zwischen den Signalleitern 3 und den Leitern 5 der flexiblen Leitung 6 festgelegt sind. Das Fixierstück 8 liegt mit seiner Außenfläche an der Wandung des Rohres 4 an.

Direkt neben dem Fixierstück 8 ist der gummielastische Dichtkörper 9 im Rohr 4 angeordnet. Er liegt ebenfalls an der Wandung des Rohres 4 an und verschließt dasselbe vollständig. Die isolierten Leiter 5 der flexiblen Leitung 6 sind durch den Dichtkörper 9 hindurchgeführt. Er umschließt die isolierten Leiter 5 völlig dicht. Der Dichtkörper 9 besteht aus temperaturbeständigem Isoliermaterial. Ein solches Material ist beispielsweise ein Fluorpolymer-Kautschuk. Dichtkörper 9 und Fixierstück 8 sind gemeinsame in axialer Richtung beispielsweise durch das umgebördelte Ende des Rohres 4 und eine Durchmesserreduzierung desselben an der Schulter 13 festgelegt.

Die Anordnung nach Fig. 2 wird beispielsweise wie folgt hergestellt:

Das Rohr 4 wird bis auf die Umbördelungen an seinen Enden in vorgegebener Länge hergestellt. Die Signalleiter 3 werden an beiden Enden abisoliert, ebenso wie die Leiter 5 an einem Ende. Dichtkörper 9 und Fixierkörper 8 werden dann auf die Leiter 5 in ihrem nicht abisolierten Bereich aufgeschoben. Danach werden die Signalleiter 3 und die Leiter 5 an den Verbindungsstellen 12 elektrisch leitend miteinander verbunden, beispielsweise durch Crimpen. Fixierstück 8 und Dichtkörper 9 werden dann auf den Leitern 5 so weit verschoben, bis die Verbindungsstellen 12 im Fixierstück 8 liegen, so wie es in Fig. 2 gezeigt ist.

Anschließend werden die Signalleiter 3 miteinander verseilt bzw. verdreht und gemeinsam mit Fixierstück 8 und Dichtkörper 9 in das Rohr 4 eingeschoben, bis das Fixierstück 8 an der Schulter 13 anliegt. Das Rohr 4 wird dann am Ende des Dichtkörpers 9 umgebördelt. Auf die am anderen Ende des Rohres 4 herausragenden blanken Leiter der Signalleiter 3 wird dann die Scheibe 7 bis zur Anlage an der Vertiefung 10 aufgeschoben. Danach wird auch dieses Ende des Rohres 4 umgebördelt.

Im Einsatzfall werden die Sonde 1 an die Signalleiter 3 angeschlossen, die komplette Anordnung in ein Fahrzeug eingebaut und die Leiter 5 mit dem Empfänger 2 verbunden.

## Patentansprüche

1. Anordnung zum Anschließen einer elektrische Signale abgebenden Signalquelle an eine flexible elektrische Leitung, die mindestens zwei mit temperaturbeständigem Material isolierte elektrische Leiter hat, bei welcher mindestens zwei gegeneinander isolierte elektrische Signalleiter in einem metallischen Rohr angeordnet sind, die an einem Ende des Rohres mit der Signalquelle und an dessen anderem Ende feuchtigkeitsdicht mit den Leitern der flexiblen Leitung verbunden sind, **dadurch gekennzeichnet,**
- **daß** die mit einem bei hohen Temperaturen in einem Bereich von 400 °C bis 700 °C beständigen Material isolierten Signalleiter (3) miteinander verseilt sind,
- **daß** die Verbindungsstellen (12) zwischen den Signalleitern (3) und den Leitern (5) der flexiblen Leitung (6) innerhalb des Rohres (4) in einem an dessen Wandung anliegenden Fixierstück (8) aus temperaturbeständigem Isoliermaterial mit Abstand zueinander festgelegt sind,
- **daß** zwischen dem Fixierstück (8) und dem der flexiblen Leitung (6) zugewandten Ende des Rohres (4) innerhalb desselben ein sich über den gesamten Rohrquerschnitt erstreckender, gummielastischer Dichtkörper (9) aus temperaturbeständigem Isoliermaterial angeordnet ist und
- **daß** am anderen Ende des Rohres (4) die Enden der aus demselben herausragenden Signalleiter (3) abisoliert und innerhalb des Rohres (4) in einer Scheibe (7) aus mineralischem Material mit Abstand zueinander festgelegt sind, welche rundum an der Wandung des Rohres (4) anliegt und dasselbe vollständig verschließt.

2. Anordnung nach Anspruch 1, **dadurch gekennzeichnet, daß** die Signalleiter (3) mit einem Geflecht aus Glasfasern isoliert sind.

3. Anordnung nach Anspruch 1 oder 2, **dadurch gekennzeichnet, daß** das Rohr (4) biegbar ist.

4. Anordnung nach einem der Ansprüche 1 bis 3, **dadurch gekennzeichnet, daß** die die Signalleiter (3) festlegende Scheibe (7) aus keramischem Material besteht.

5. Anordnung nach einem der Ansprüche 1 bis 4, **dadurch gekennzeichnet, daß** das Fixierstück (8) aus einem Polyetheretherketon besteht.

6. Anordnung nach einem der Ansprüche 1 bis 5, **dadurch gekennzeichnet, daß** der Dichtkörper (9) aus einem Fluorkautschuk besteht.

## Claims

1. Arrangement for connecting a signal source outputting electrical signals to a flexible electrical line, which has at least two electrical conductors, which are insulated by a thermally resistant material, in the case of which arrangement at least two electrical signal conductors, which are insulated from one another, are arranged in a metallic tube, which signal conductors are connected to the signal source at one end of the tube and to the conductors of the flexible line in a moisture-tight manner at its other end, **characterized**
- **in that** the signal conductors (3), which are insulated by a material which is stable at high temperatures in a range of from 400°C to 700°C, are twisted with one another,
- **in that** the connection points (12) between the signal conductors (3) and the conductors (5) of the flexible line (6) are fixed at a distance from one another within the tube (4) in a fixing piece (8), which bears against the wall of said tube and consists of a thermally resistant insulating material,
- **in that** a rubber-elastic sealing body (9), which extends over the entire tube cross section and consists of a thermally resistant insulating material, is arranged between the fixing piece (8) and that end of the tube (4) which faces the flexible line (6), within said tube, and
- **in that,** at the other end of the tube (4), the ends of the signal conductors (3) which protrude out of said tube have had the insulation stripped from them and are fixed at a distance from one another within the tube (4) in a disc (7) consisting of a mineral material, which disc bears against the wall of the tube (4) all the way around and completely closes said tube.

2. Arrangement according to Claim 1, **characterized in that** the signal conductors (3) are insulated by a braiding consisting of glass fibres.

3. Arrangement according to Claim 1 or 2, **characterized in that** the tube (4) is flexible.

4. Arrangement according to one of Claims 1 to 3, **characterized in that** the disc (7) fixing the signal conductors (3) consists of a ceramic material.

5. Arrangement according to one of Claims 1 to 4, **characterized in that** the fixing piece (8) consists of polyether ether ketone.

6. Arrangement according to one of Claims 1 to 5, **characterized in that** the sealing body (9) consists of a fluororubber.

## Revendications

1. Dispositif de raccordement d'une source de signaux délivrant des signaux électriques à un câble électrique flexible, qui comporte au moins deux conducteurs électriques isolés avec une matière résistant à la température, et dans lequel au moins deux conducteurs de signaux électriques isolés l'un par rapport à l'autre sont disposés dans un tube métallique, conducteurs qui sont raccordés à une extrémité du tube à la source de signaux et à l'autre extrémité de celui-ci de façon étanche à l'humidité aux conducteurs du câble flexible, **caractérisé en ce que**
- les conducteurs de signaux (3) isolés avec une matière résistant à des températures élevées dans une plage de 400°C à 700°C sont toronnés les uns avec les autres,
- les points de raccordement (12) entre les conducteurs de signaux (3) et les conducteurs (5) du câble flexible (6) sont fixés à l'intérieur du tube (4) à distance l'un de l'autre à une pièce de fixation (8) en une matière isolante résistant à la température attachée à la paroi de celui-ci,
- un corps d'étanchéité élastique caoutchouteux (9) en une matière isolante résistant à la température, s'étendant sur toute la section transversale du tube, est disposé entre la pièce de fixation (8) et l'extrémité du tube (4) tournée vers le câble flexible (6), à l'intérieur de celui-ci, et
- à l'autre extrémité du tube (4), les extrémités des conducteurs de signaux (3) sortant de celui-ci sont dénudées et sont maintenues à distance l'une de l'autre à l'intérieur du tube (4) dans un disque (7) en une matière minérale, qui s'applique par son pourtour sur la paroi du tube (4) et ferme celui-ci entièrement.

2. Dispositif selon la revendication 1, **caractérisé en ce que** les conducteurs de signaux (3) sont isolés avec un tissu en fibres de verre.

3. Dispositif selon la revendication 1 ou 2, **caractérisé en ce que** le tube (4) est flexible.

4. Dispositif selon l'une quelconque des revendications 1 à 3, **caractérisé en ce que** le disque (7) fixant les conducteurs de signaux (3) se compose d'une matière céramique.

5. Dispositif selon l'une quelconque des revendications 1 à 4, **caractérisé en ce que** la pièce de fixation (8) se compose d'une polyétheréthercétone.

6. Dispositif selon l'une quelconque des revendications 1 à 5, **caractérisé en ce que** le corps d'étanchéité (9) se compose d'un caoutchouc fluoré.
